# EUROPÄISCHE PATENTANMELDUNG

(11) **EP 1 921 735 A2**
(43) Veröffentlichungstag der Anmeldung: **14.05.2008**
(21) Anmeldenummer: 07114807.6
(22) Anmeldetag: 23.08.2007
(51) Int. Cl.: H02K 41/03

(54) **Eisenbehaftere Linearmotor mit kleiner Rastkraft bei hoher Leistungsdichte**

(30) Priorität: 09.11.2006 CH 17792006
(71) Anmelder: Jenny, Alois, 6037 Root (CH)
(72) Erfinder: Jenny, Alois, 6037 Root (CH)
(74) Vertreter: Schneider Feldmann AG Patent- und Markenanwälte

(57) **Zusammenfassung**

In einem Linearmotor (1) wird die Rastkraft reduziert, indem die Höhe der Eisenpole (522) in den beiden Aussenbereichen des Spulenpakets unterschiedlich gewählt wird, bevorzugt durch eine schrittweise Reduktion der Höhe der Eisenpole (522) gegen die Enden des Stators (2) hin. In Kombination mit einer leichten Schrägstellung der Magnete werden die Rastkräfte weiter minimiert, bei vernachlässigbarer Einbusse der Vortriebskraft.

Die exakte Dimensionierung der Eisenpole (522) ist abhängig unter anderem von den Dimensionierungen der Spulen (51) und anderen Eigenschaften des gesamten Linearmotors (1), und kann durch Simulationen gefunden und optimiert werden. Dabei wird ein Optimum gesucht zwischen einer möglichst grossen Reduktion der Rastkraftamplitude und einer möglichst hohen Vortriebskraft. Ein erfindungsgemässer Linearmotor (1) hat im wesentlichen die gleichen Herstellungskosten wie ein herkömmlicher Linearmotor ohne Massnahmen gegen die Rastkräfte, weil keine aufwendigen aktiven Vorrichtungen notwendig sind, und die Herstellung des Stators nicht komplizierter wird. Da kein zusätzlicher Platz für aktive oder passive Vorrichtungen zur Rastkraftreduktion notwendig ist, baut ein solcher Linearmotor kompakter und hat damit eine höhere Leistungsdichte.

## Beschreibung

### Technisches Gebiet

Die vorliegende Erfindung betrifft einen eisenbehafteten Linearmotor mit einem Stator und einem entlang einer Laufachse des Stators verschiebbar angeordneten Läufer, gemäss dem Oberbegriff des unabhängigen Patentanspruchs.

### Stand der Technik

In der modernen Automationstechnik sind bürstenlose Linearmotoren als Aktuatoren nicht mehr wegzudenken. Sie erreichen hohe Geschwindigkeiten, und trotzdem eine hohe Präzision bis in den Nanometer-Bereich. Für viele Anwendungen solcher Linearmotoren, beispielsweise in Linearachsen oder Kreuztischen, ist zudem ein möglichst geringes Volumen der Linearmotoren gewünscht, bei gleichzeitig möglichst hoher Leistung.

Linearmotoren sind Elektromotoren und bestehen aus einem unbeweglichen Stator und einem gegenüber dem Stator entlang einer Laufachse verschiebbaren Läufer, der prinzipiell dem beweglichen Rotor in einem rotierenden Elektromotor entspricht. Der Läufer kann gegenüber dem Stator beispielsweise über ein Schienen-Rollen-System verschiebbar gelagert sein. Ein speziell für Linearmotoren mit kompakten Abmessungen geeigneter Aufbau, bestehend aus Monoblock und eingefrästen Führungsnuten, ist in der europäischen Patentanmeldung 06405146 offenbart.
Linearmotoren können in verschiedenen Bauweisen gefertigt werden, analog zu den rotierenden Elektromotoren. In einer insbesondere für hohe Leistungsdichte geeigneten Variante sind auf dem Läufer mehrere Permanentmagnete mit abwechselnder Polausrichtung entlang der Laufachse angeordnet, und auf dem Stator mehrere Elektromagnetspulen, ebenfalls entlang der Laufachse.

Die Spulen werden so angesteuert, dass ein Wander-Magnetfeld entsteht, in welchem auf den Läufer eine Kraft wirkt, die diesen vorwärts bewegt. Die Ansteuerung der Spule erfolgt bei modernen, bürstenlosen Linearmotoren elektronisch mittels Feldvektorregelung und Positionsmesssystem.
Alternativ können in einem solchen Linearmotor die Elektromagnete auch auf dem Läufer angebracht sein, und die Permanentmagnete auf dem Stator. Diese Bauweise ist für schienenförmige Statoren, welche wesentlich länger sind als der Läufer, kostengünstiger in der Herstellung. Sie bedingt jedoch einen Kabelschlepp zum Läufer, während bei der ersten Variante der Läufer frei beweglich ist.

Um höhere Vortriebsleistungen bei gleichzeitig geringem Motorvolumen zu erreichen, können die Elektromagnete anstatt mit Luftspulen mit Eisenkern-Spulen realisiert werden. Um möglichst hohe Leistungen zu erreichen, wird der Luftspalt zwischen Eisenpolen und Permanentmagneten zudem möglichst klein gehalten. Eisenpole haben weiter den Vorteil, dass entstehende Wärme besser abgeleitet werden kann, was ebenfalls grössere Leistungen erlaubt.
Die Verwendung von Eisenkern-Spulen hat gegenüber Luftspulen aber den erheblichen Nachteil, dass eine Rastkraft auftritt, das sogenannte "Cogging", ein Phänomen, welches auch von rotierenden Elektromotoren bekannt ist. Zwischen dem Eisenpaket, insbesondere den Eisenpolen, des Stators und den Permanentmagneten des Läufers treten starke statische, also stromunabhängige, Anziehungskräfte (Rastkräfte) auf, welche eine robuste Auslegung der mechanischen Führung des Läufers verlangen. Bei der Bewegung des Läufers gegenüber dem Stator resultiert eine modulierte, abwechselnd positive und negative Rastkraft, welche der konstanten Vortriebskraft des Linearmotors überlagert wird. Beim Fahren des Linearmotors mit konstanter Geschwindigkeit muss diese modulierte Rastkraft stetig ausgeregelt werden, da sonst eine Welligkeit des Geschwindigkeitsverlaufs resultiert. Ein weiterer Nachteil der Rastkraft ist das verfälschte Verhältnis zwischen Stromaufnahme des Motors und effektiver Vortriebskraft, diese ist nicht linear und damit kann der Motor nicht für präzise Kraft- resp. Kraft-/Wegmessung eingesetzt werden.

Zur eigentlichen Rastkraft kommt beim eisenbehafteten Linearmotor zusätzlich noch ein Ein- und Auslaufeffekt hinzu, aufgrund der endlichen Länge des Läufers und/oder des Stators. Wenn der Läufer in den Bereich eines der beiden Stator-Enden fährt, ist das magnetische System unsymmetrisch und die Rastkraft steigt zusätzlich an. Für eine kompakte Bauweise sollte aber möglichst der maximale Verfahrweg des Systems genutzt werden können. Daher wird vorteilhaft dieser Ein- /Auslaufeffekt reduziert.

Eine bekannte Lösung zur Reduktion der Rastkraft in rotierenden Elektromotoren und Linearmotoren ist die Schrägstellung der Permanentmagnete gegenüber den Eisenpolen, respektive die Schrägstellung der Eisenpole gegenüber den Permanentmagneten oder alternativ die Verwendung speziell geformter Permanentmagnete.
Dies führt zur Überlagerung anziehender und abstossender Kräfte, und damit zu einer Reduktion der Rastkraft. Da ein starker Schrägstellungsgrad (bis 20°) erforderlich ist, sinkt damit jedoch zwangsläufig auch die resultierende Vortriebskraft.
Eine ähnliche Lösung zeigt auch US 5214323, bei welchem eine teilweise Aufhebung der Rastkraft erreicht wird durch Kombination von zwei Statoren und zwei miteinander gekoppelten Läufern, wobei die Statoren oder die Läufer um einen halben Polabstand gegeneinander versetzt sind. Eine kompakte Bauweise des Linearmotors ist mit dieser Ausgestaltung jedoch schwer zu erreichen.

US 2004/0256918 A1 zeigt einen Linearmotor mit einem Läufer mit Elektromagneten und einem schienenförmigen Stator mit Permanentmagneten, bei welchem eine am Ende des Läufers angebrachte zusätzliche Spule so angesteuert wird, dass sie eine gegenüber der Rastkraft entgegen gesetzte Gegenkraft erzeugt, und so die Rastkraft aufhebt. Diese Lösung ist nur für Läufer geeignet, welche sich auf einem langen Stator fortbewegen. Das zusätzliche aktive Element ist zudem aufwendig, und damit teuer.

US 2005/0236912 A1 und US 4912746 verwenden speziell geformte blinde Polblöcke, also Eisenpole ohne Spulen, an den beiden Enden des Spulenpakets. Die Reduktion der Vortriebskraft ist geringer, aber das Spulenpaket wird länger und schwerer. Die statische Anziehungskraft zwischen Stator und Läufer wird zudem grösser, was eine robustere Auslegung der mechanischen Führung notwendig macht.

EP 1511164 A2 zeigt einen Linearmotor mit einem mit Elektromagneten ausgestatteten Läufer, bei welchem an den beiden Enden des Läufers ein blinder Eisenpol angeordnet ist. Der genannte endständige Eisenpol soll die Rastkraft verringern, und verfügt über eine gewölbte Oberfläche, sowie über Bohrungen über die gesamte Breite des blinden Eisenpols, in welchen Magnete angeordnet sind. Eine derartige Bauweise ist aufwendig, und dementsprechend teuer.

US 2005/0134122 A1 zeigt einen Linearmotor, bei welchem nach dem Nonius-Prinzip der Abstand zwischen den einzelnen Eisenpolen leicht geringer ist als der Abstand zwischen den Permanentmagneten. Dies führt zu destruktiver Interferenz der Rastkräfte, und damit zu einer Reduktion der Rastkräfte. Damit ist jedoch die Rastkraftproblematik im Ein- Auslaufbereich nicht gelöst.

Ebenfalls bekannt aus dem Stand der Technik ist die Verwendung von T-förmigen, gerippten Eisenpolen, um eine homogenere statische Anziehungskraft zwischen Permanentmagneten und Eisenpolen zu erreichen. Diese Bauweise hat den Nachteil, dass die Spulen nicht einfach über die Eisenpolen gestülpt werden können, sondern aufwendig um diese gewickelt werden müssen. Ebenfalls ist die Bauhöhe grösser.

### Darstellung der Erfindung

Aufgabe der vorliegenden Erfindung ist es, einen eisenbehafteten Linearmotor der eingangs erwähnten Art zur Verfügung zu stellen, bei dem die vorgenannten Probleme weitgehend vermieden werden, und der insbesondere eine geringe Rastkraft auch im Ein-/Auslaufbereich aufweist, eine kompakte Bauweise erlaubt und kostengünstig hergestellt werden kann.

Diese und andere Aufgaben werden gelöst durch einen Linearmotor der eingangs erwähnten Art gemäss dem unabhängigen Anspruch 1. Weitere vorteilhafte Ausführungsformen eines erfindungsgemässen Linearmotors gehen aus den abhängigen Ansprüchen hervor.

In einem erfindungsgemässen eisenbehafteten Linearmotor wird die störende Rastkraft und der Ein-/Auslaufeffekt reduziert, indem einerseits die Höhe der Eisenpole in den beiden Aussenbereichen des Spulenpakets unterschiedlich gewählt wird, bevorzugt durch eine schrittweise Reduktion der Höhe der Eisenpole gegen die Enden des Stators hin und andererseits durch eine leichte (um wenige Grad) Schrägstellung der Permanentmagnete resp. Eisenpole. Die Spulen selber sind bevorzugt identisch. Die exakte Dimensionierung der Eisenpole ist abhängig unter anderem von den Dimensionierungen der Spulen und anderen Eigenschaften des gesamten Linearmotors, und kann durch dreidimensionale Finite-Elemente-Methode (FEM) Simulationen gefunden und optimiert werden. Dabei wird ein Optimum gesucht zwischen einer möglichst grossen Reduktion der Rastkraftamplitude und einer möglichst geringen Reduktion der Motorkraft.
Die unterschiedliche Höhe der Eisenpole in Kombination mit der leichten Schrägstellung der Magnete führt dazu, dass sich die abstossenden und anziehenden statischen Kräfte zwischen den einzelnen Permanentmagneten und den Eisenpolen sich grösstenteils gegenseitig so überlagern, dass in der translatorischen Richtung die effektiv resultierende Rastkraft nur eine geringe Amplitude zeigt, im Vergleich zu einem Linearmotor mit identischen Polhöhen.
Ein erfindungsgemässer eisenbehafteter Linearmotor hat im wesentlichen die gleichen Herstellungskosten wie ein herkömmlicher eisenbehafteter Linearmotor ohne Massnahmen gegen die Rastkraft, weil keine aufwendigen aktiven Vorrichtungen notwendig sind, und die Herstellung des Stators nicht komplizierter wird.

### Ausführung der Erfindung

Die Wirkungsweise eines erfindungsgemässen Linearmotors soll nachfolgend weiter erläutert werden, mit Bezug auf die anliegenden Zeichnungen.
Figur 1 zeigt schematisch eine mögliche Ausführung eines Eisenpakets eines erfindungsgemässen Linearmotors (a) und des Eisenpakets eines herkömmlichen Linearmotors (b).
Figur 2 zeigt einen erfindungsgemässen Linearmotor in einem Längsschnitt entlang der Laufachse.
Figur 3 zeigt das Kraft-Weg-Diagramm eines erfindungsgemässen Linearmotors im Vergleich zu einem herkömmlichen Linearmotor mit identischen Polhöhen.
Figur 4 zeigt schematisch eine weitere mögliche Ausführung eines Stators eines erfindungsgemässen Linearmotors.

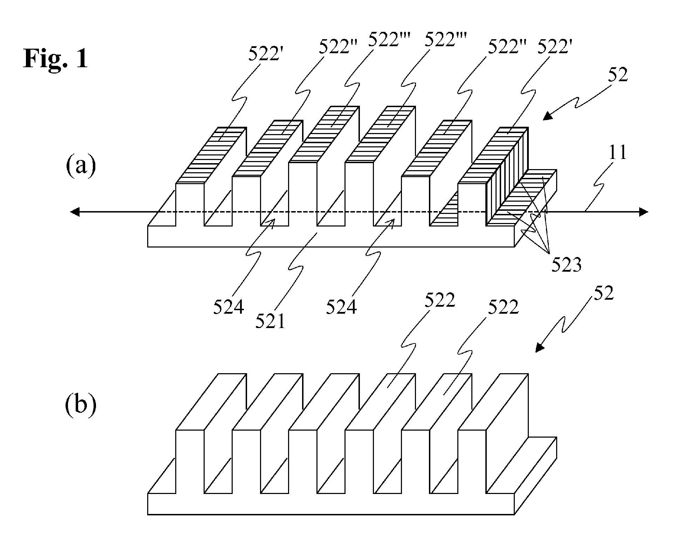

Eine mögliche Gestaltungsform des Eisenpakets 52 eines Stators eines erfindungsgemässen Linearmotors ist in Figur 1(a) schematisch dargestellt. Der entsprechende Linearmotor verfügt über einen Stator mit sechs Spulen (nicht dargestellt), welche über die sechs Eisenpole 522 des Eisenpakets 52 gestülpt werden. Die einzelnen Eisenpole 522 sind über einen rückseitigen Eisenkern 521 verbunden. Zur Vermeidung von Wirbelströmen besteht das Eisenpaket 52 wie bei Elektromotoren üblich aus einer Vielzahl von laminierten Eisenblechen 523 (nur teilweise dargestellt). Die Höhe der einzelnen Eisenpole 522', 522", 522'" nimmt entlang der Laufachse 11 gegen die beiden Enden des Eisenpakets 52 hin ab. Dabei sind jeweils zwei Eisenpole gleich hoch. Figur 1(b) zeigt zum Vergleich ein Eisenpaket eines Linearmotors mit gleich bleibender Eisenpolhöhe, wie er aus dem Stand der Technik bekannt ist.

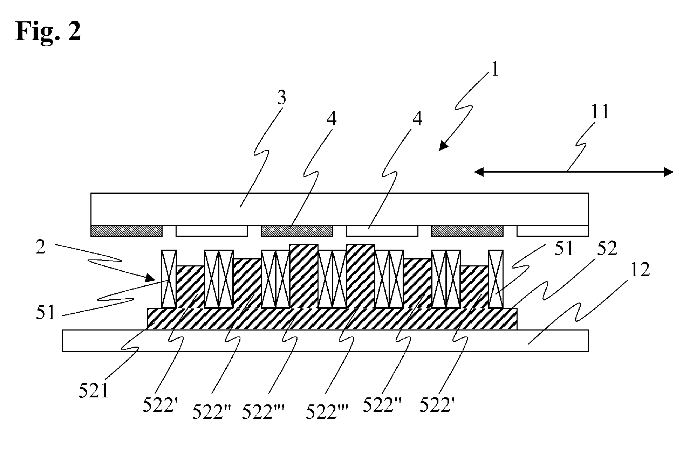

Figur 2 zeigt schematisch einen erfindungsgemässen Linearmotor 1 mit dem Eisenpaket 52 aus Figur 1 (a), in einem Längsschnitt entlang der Laufachse. Der Stator 2 umfasst ein auf einer Grundplatte 12 angebrachtes Eisenpaket 52 mit sechs Eisenpolen 522', 522", 522"'. Um die sechs Eisenpole sind sechs identische Spulen 51 angeordnet. Über dem Stator 2 ist der Läufer 3 angeordnet, welcher entlang der Laufachse 11 frei beweglich gelagert ist. Auf der dem Stator 2 zugewandten Seite des Läufers 3 ist eine Mehrzahl von um wenige Grad schräggestellten Permanentmagneten 4 angeordnet, mit abwechselnder Polarität. Die Höhe der einzelnen Eisenpole 522', 522", 522'" nimmt gegen die längsseitigen Enden des Eisenpakets 52 hin ab, wobei die Höhe der Spulen 51 gleich bleibt. Beim gezeigten Linearmotor handelt es sich um einen 3-Phasen-Motor, der Abstand der einzelnen Permanentmagnete in Laufrichtung entspricht dem 1.5-fachen Abstand der Eisenpole.

Ausführungsbeispiel: Die ideale Höhe der einzelnen Eisenpole 522 für gegebene Gesamtdimensionen eines Linearmotors kann durch entsprechende FEM-Simulationen bestimmt werden, wobei die Höhen der Eisenpole solange variiert werden, bis die Amplitude der Rastkraftmodulation minimal ist. Ein Eisenpaket mit einer Tiefe von 20 mm, einer Länge in Laufrichtung von 52 mm, einer Höhe des Eisenkerns von 3.2 mm und einer maximalen Höhe von 10.5 mm weist sechs Eisenpole auf. Alle Eisenpole haben in Laufrichtung eine Länge von 4 mm und sind durch 4 mm breite Nuten getrennt. Die Höhe der sechs über die Eisenpole gestülpten Spulen beträgt jeweils 7.1 mm. Durch 3D-FEM-Simulation wurden für einen derart dimensionierten Stator die optimierten Höhen der einzelnen Eisenpole berechnet, bei denen die Amplitude der transversalen Komponente der Rastkraft in Laufrichtung minimal wird, wobei die beiden innersten Eisenpole mit einer fixen Höhe über dem Eisenkern von 7.3 mm nicht variiert wurden. Ein Optimum wurde gefunden für eine Höhe von 6.70 für die beiden zweitäussersten Eisenpole und eine Höhe von 5.90 mm für die beiden äussersten Eisenpole. Die leichte Schrägstellung der Permanentmagnete gegenüber der Senkrechten zur Laufachse beträgt zwischen 5 und 8 Grad, bevorzugt zwischen 6 und 7 Grad, und besonders bevorzugt 6.8 Grad.

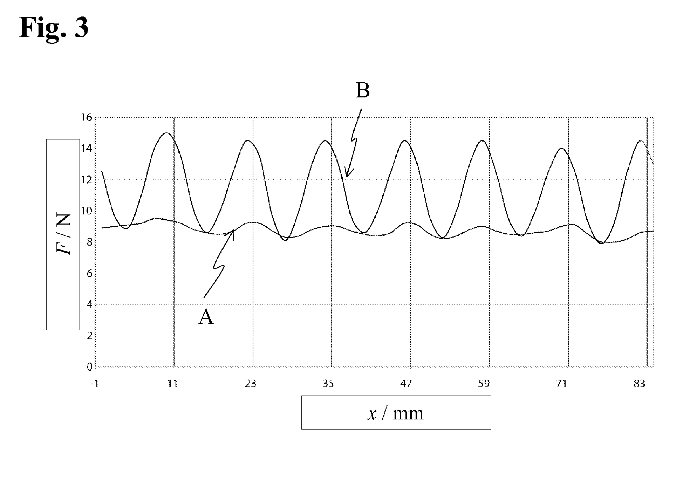

Figur 3 zeigt die in einem 3-Phasenlinearmotor auf einen beweglichen Läufer wirkende effektive Vortriebskraft F entlang der Laufachse bei der Fahrt über den Stator eines Linearmotors, als Funktion der Position x des Läufers in Bezug auf den Stator. Die Kraft F setzt sich zusammen aus der Motorkraft des mit einem konstanten Strom betriebenen Linearmotors und der statischen Rastkraft zwischen den Permanentmagneten des Läufers und den Eisenpolen des Stators.
Kurve A zeigt eine Messung mit einem Eisenpaket gemäss Ausführungsbeispiel, während Kurve B eine Messung zeigt mit einem Eisenpaket mit identischen Eisenpolen.
Die Amplitude der modulierten Rastkraft des erfindungsgemässen Linearmotors beträgt ca. 1 N, während sie ohne Polhöhenkorrektur ca. 6 N beträgt.

Die Amplitude der Rastkraft kann noch weiter reduziert werden durch stärkere Schrägstellung der Permanentmagnete. Dabei reduziert sich jedoch auch die Vortriebskraft. Mittels 3D-FEM-Simulation kann die Auslegung auf die gewünschten Eigenschaften optimiert werden.

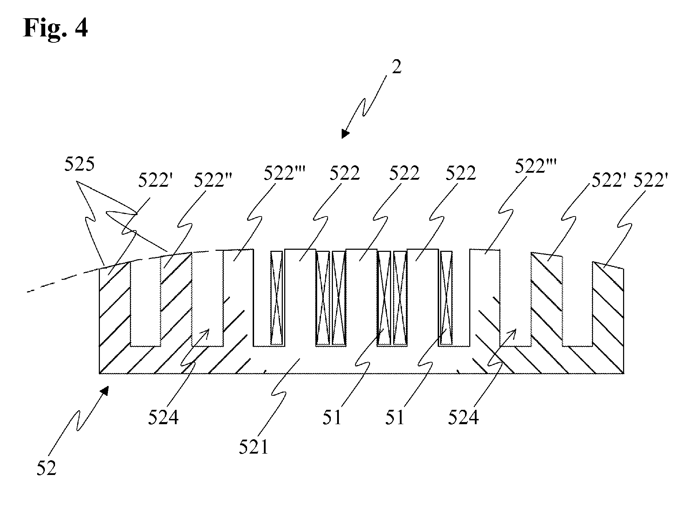

Figur 4 zeigt in einem Längsschnitt entlang der Laufachse eine weitere bevorzugte Ausführung eines Stators 2 eines erfindungsgemässen Linearmotors, mit einem Eisenpaket 52 mit neun Eisenpolen 522, 522', 522", 522"'. Die Form des Eisenpakets ist wiederum spiegelsymmetrisch. Aus Gründen der Übersichtlichkeit sind die Spulen 51 nur bei den drei inneren Eisenpolen 522 dargestellt, jedoch verfügen alle Eisenpole über identische Spulen 51.

Die gezeigte Variante eines Stators 2 für einen erfindungsgemässen Linearmotor ist länger als der Stator aus Figur 2. Die Höhen der drei inneren Eisenpole 522 sind darum gleich gewählt, weil der Ein- und Auslaufeffekt in dieser Zone eine vernachlässigbare Rolle spielt. Die Polhöhe der drei äussersten Eisenpole 522', 522", 522'" nimmt wiederum gegen die beiden Enden des Eisenpakets 52 hin ab. Um die Rastkraft weiter zu verringern sind die gegen den Läufer gerichteten Endflächen 525 der Eisenpole konvex geformt, mit abnehmender Höhe gegen die Enden des Eisenpakets hin. In einer besonders bevorzugten Form entsprechen die Endflächen 525 der drei reduzierten äusseren Eisenpole im Längsschnitt einem Kreissegment. In einer weiteren möglichen Ausführung entsprechen die Endflächen 525 der drei reduzierten äusseren Eisenpole im Längsschnitt einem schief abfallenden Dreieckschenkel.

Das erstgenannte Ausführungsbeispiel für optimierte Dimensionen eines erfindungsgemässen Linearmotors kann durch einen Fachmann ohne grösseren Aufwand durch Anwendung von bekannten Simulationsverfahren, insbesondere FEM, an jede gegebene bzw. gewünschte Geometrie eines Linearmotors angepasst werden. Insbesondere ist es auch möglich, das Prinzip der Erfindung auch auf andere Typen von eisenbehafteten Linearmotoren zu verallgemeinern.

### Bezugszeichenliste

- 1: Linearmotor
- 11: Laufachse
- 12: Grundplatte
- 2: Stator
- 3: Läufer
- 4: Permanentmagnet
- 51: Spule
- 52: Anker/Eisenpaket
- 521: Eisenkern
- 522, 522', 522", 522"': Eisenpol
- 523: Eisenblech
- 524: Nut
- 525: Endflächen der Eisenpole

## Patentansprüche

1. Eisenbehafteter Linearmotor (1) mit einem Stator (2) und einem entlang einer Laufachse (11) des Stators verschiebbar angeordneten Läufer (3), wobei entweder auf dem Stator (2) oder auf dem Läufer (3) entlang der Laufachse (111) eine Mehrzahl von Permanentmagneten (4) mit abwechselnder Polausrichtung angeordnet ist, und
entsprechend der Läufer (3) beziehungsweise der Stator (2) ein Eisenpaket (52) mit einer Mehrzahl von Eisenpolen (522, 522', 522", 522"') mit darauf angebrachten Spulen (51) umfasst,
**dadurch gekennzeichnet, dass**
die Höhe der Eisenpole (522, 522', 522", 522"') der einzelnen Spulen (51) unterschiedlich ist.

2. Linearmotor nach Anspruch 1, **dadurch gekennzeichnet, dass** die Höhe der Eisenpole (522, 522', 522", 522"') der einzelnen Spulen (51) in Laufrichtung (11) gegen die beiden Enden des Eisenpakets (52) hin abnimmt.

3. Linearmotor nach Anspruch 1 oder 2, **dadurch gekennzeichnet, dass** die Endflächen (525) der Eisenpole (522, 522', 522", 522"') gegen die beiden Enden des Eisenpakets (52) hin schief abfallend sind.

4. Linearmotor nach einem der Ansprüche 1 bis 3, **dadurch gekennzeichnet, dass** die Endflächen (525) der Eisenpole (522, 522', 522", 522"') gerundet sind, wobei die Endflächen (525) in einem Längsschnitt entlang der Laufachse (11) bevorzugt verschiedenen Segmenten eines gleichen Kreises entsprechen.

5. Linearmotor nach Anspruch 1 oder 2, **dadurch gekennzeichnet, dass** die Endflächen (525) der Eisenpole (522, 522', 522", 522"') parallel zur Ebene der Permanentmagnete (4) des Läufers (3) verlaufen.

6. Linearmotor nach einem der Ansprüche 1 bis 5, **dadurch gekennzeichnet, dass** die Höhe der Spulen (51) identisch ist.

7. Linearmotor nach einem der Ansprüche 1 bis 6, **dadurch gekennzeichnet, dass** die Höhe der Eisenpole bei zwei oder mehr benachbarten Eisenpolen (522) gleich ist.

8. Linearmotor nach einem der Ansprüche 1 bis 6, **dadurch gekennzeichnet, dass** die Höhe eines Eisenpols (522, 522', 522", 522"') jeweils zwischen 8 und 12% geringer ist als die Höhe des gegen die Mitte des Eisenpakets (52) hin gelegenen benachbarten Eisenpols (522, 522', 522", 522"').

9. Linearmotor nach einem der Ansprüche 1 bis 8, **dadurch gekennzeichnet, dass** der Linearmotor ein 3-Phasen-Linearmotor ist.
